(19) Europäisches Patentamt
European Patent Office
Office européen des brevets

(11) **EP 3 279 867 B1**

(12) **EUROPEAN PATENT SPECIFICATION**

(45) Date of publication and mention of the grant of the patent:
**11.12.2019 Bulletin 2019/50**

(51) Int Cl.:
*G06T 11/20* ^(2006.01)

(21) Application number: **16182653.2**

(22) Date of filing: **03.08.2016**

(54) **METHOD AND SYSTEM FOR THE VISUALIZATION OF BIVARIATE POLYNOMIALS**

VERFAHREN UND SYSTEM ZUR VISUALISIERUNG VON BIVARIATEN POLYNOMEN

PROCÉDÉ ET SYSTÈME DESTINÉS À VISUALISER DES POLYNÔMES BI-VARIÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.02.2018 Bulletin 2018/06**

(73) Proprietor: **Alleviating Science BV**
**6422 RK Heerlen (NL)**

(72) Inventor: **ZAUTSEN, Remigius Reinerus Maria**
**6351 CS Bocholtz (NL)**

(74) Representative: **Pronovem**
**Office Van Malderen**
**Avenue Josse Goffin 158**
**1082 Bruxelles (BE)**

(56) References cited:
**EP-A2- 0 465 852**

• **ALEXA M ET AL: "Computing and rendering point set surfaces", IEEE TRANSACTIONS ON VISUALIZATION AND COMPUTER GRAPHICS, IEEE SERVICE CENTER, LOS ALAMITOS, CA, US, vol. 9, no. 1, 1 January 2003 (2003-01-01) , pages 3-15, XP011095505, ISSN: 1077-2626, DOI: 10.1109/TVCG.2003.1175093**

• **MIGLIORATI GIOVANNI ED - WALTER DIDIMO ET AL: "Learning with Discrete Least Squares on Multivariate Polynomial Spaces Using Evaluations at Random or Low-Discrepancy Point Sets", NETWORK AND PARALLEL COMPUTING; [LECTURE NOTES IN COMPUTER SCIENCE; LECT.NOTES COMPUTER], SPRINGER INTERNATIONAL PUBLISHING, CHAM, vol. 9432 Chap.1, no. 558, 6 January 2016 (2016-01-06), pages 1-13, XP047332743, ISSN: 0302-9743 ISBN: 978-3-642-01019-4 [retrieved on 2016-01-06]**

• **Quoc-Nam Tran ET AL: "CASA Reference Manual (Version 2.3) 1", , 22 October 1997 (1997-10-22), pages 1-93, XP055342071, Retrieved from the Internet: URL:https://pdfs.semanticscholar.org/4dc1/ 6cca74f1cc832d4a07d095e61a198e942b2a.pdf [retrieved on 2017-02-03]**

## Description

### Field of the invention

The present invention generally relates to a method for the visualization of bivariate polynomial $z = A \cdot x^2 + B \cdot x \cdot y + C \cdot y^2 + D \cdot x + E \cdot y + F$, comprising the steps of loading a polynomial and boundary conditions into computer processing means, processing, by the computer processing means, of the polynomial within the boundary conditions for visualization and visualizing the polynomial on visualization means. Furthermore, the present invention relates to a system for the visualization of bivariate polynomial $z = A \cdot x^2 + B \cdot x \cdot y + C \cdot y^2 + D \cdot x + E \cdot y + F$, comprising loading means adapted for loading a polynomial and boundary conditions, processing means adapted for processing the polynomial within the boundary conditions for visualization, and visualization means adapted for visualizing the polynomial processed for visualization within the boundary conditions. Furthermore, the present invention relates to a computer readable medium comprising computer program code, which, when run on a computer, is adapted for performing said method.

### Background of the invention

Known systems and methods for the visualization of polynomials, in particular methods and systems for the visualization of bivariate polynomials (e.g. $Z = A \cdot x^2 + B \cdot x \cdot y + C \cdot y^2 + D \cdot x + E \cdot y + F$), comprise loading means, processing means and visualization means, wherein the loading means are adapted for loading the polynomial and parameters such as the x-y canvas, the processing means are adapted for calculating the z-value on every x-y coordinate of a predefined x-y grid within the x-y canvas and the visualization means are adapted for the visualization of the z-values on every x-y coordinate of the predefined x-y grid.

The disadvantage of such systems and methods is that the size of the resulting datafile that makes up the image that is used for the visualization of polynomials and which is transferred from the processing means to the visualization means is relatively large. This limits the utilization of such a system or method in situations where the loading and/or visualization steps are performed on separate devices, wherein the connection between the devices is provided by a local area network or any other known type of network that has limited bandwidth with respect to the data that is being transmitted. Therefore, known server-client configurations are difficult to realize, which leaves the end-user to rely on stand-alone solutions with more powerful processing means than would have been necessary in a server-client configuration.

This disadvantage can be solved by adapting the processing step to determine the contour of the polynomial at certain z-values on the basis of the calculated z-value on every x-y coordinate of a predefined x-y grid and writing these contours to a datafile in the form of vectors. The resulting datafile is much smaller and therefore allows the separation of processing means and loading means and/or visualization means, wherein the connection is provided by a network type with a previously insufficient bandwidth.

A disadvantage of this solution is that the processing time on the processing means increases because of the additional step, which results in less processing time available for performing other tasks, delays in the visualization of the polynomial and increased energy consumption for processing the polynomial for visualization.

Alexa et al ["Computing and Rendering Point Set Surfaces", IEEE TVCG, Vol. 9, No. 1, pp. 3-15, Jan.-Mar. 2003] advocates the use of a point set without connectivity to represent a surface. Smooth local maps are used to generate an adequate representation of a surface to be rendered. The smooth surface is rendered by a small number of non-conforming overlapping polynomial patches.

### Object of the invention

One object of aspects of the present invention is to shorten the processing time required for processing a polynomial to a datafile comprising vectors describing the borders of domains with certain z-value ranges.

### Summary of the invention

According to a first aspect of the invention, there is provided a method for the visualization of bivariate polynomials, as set out in the appended claims. The method comprises a step of loading a polynomial and boundary conditions into computer processing means, a step of processing, by the computer processing means, of the polynomial within the boundary conditions for visualization and a step of visualizing the polynomial on visualization means. The processing step comprises a step of determining a plurality of distinct z-values. The plurality of distinct z-values advantageously overlap z-values spanning the boundary conditions. The processing step further comprises a step of determining a combination of shape-characteristic parameters of the polynomial. Additionally, the processing step comprises determining at least one or a combination of vector-characteristic parameters based on the corresponding combination of shape-characteristic parameters. The at least one vector-characteristic parameter, possibly in combination with the one or more (the combination of) shape-characteristic parameters, is representative for a contour of the polynomial at each distinct z-value. Drawing directives, which may be visualization system-specific, can be set up on the basis of the combination of vector-characteristic parameters.

According to a second aspect of the invention, there is provided a system for the visualization of bivariate polynomials, as set out in the appended claims. The system comprises loading means adapted for loading a polynomial and boundary conditions, processing means adapted for processing the polynomial within the boundary conditions for visualization, and visualization means adapted for visualizing the polynomial processed for visualization within the boundary conditions. The processing means is loaded with computer program code adapted for performing the method according to the first aspect.

According to a third aspect of the invention, there is provided a computer readable medium, as set out in the appended claims. The computer readable medium comprises computer program code, which, when run on a computer, is adapted for performing the method according to the first aspect.

One advantage of methods according to the invention is that the processing time required for processing a polynomial to a datafile comprising vectors describing the contour of the polynomial at certain z-values is shortened. This is accomplished by eliminating the need to generate a bitmap datafile for the entire dataset before generating a datafile comprising vectors describing the contour of the polynomial at certain z-values. The shortened processing time has the further benefit that more processing time is available for performing other tasks, results can be visualized faster and less energy is consumed for processing the polynomial for visualization.

A surprising benefit is that the shortening of the processing time makes it possible for separate processing means, loading means and visualization means to at least substantially immediately change the visualization after adjusting the boundary conditions (e.g. minimal x-value, maximal x-value, minimal y-value and maximal y-value) or factors (e.g. A, B, C, D, E and F) of the polynomial. This makes it easier for the end-user to understand the interactions between factors, which is much more complicated to understand from still images or delayed changes in graphic representations. Understanding these interactions enables the end-user to better manipulate the factors to achieve a desired circumstance.

**Brief description of the drawings**

The invention will now be explained in greater detail with reference to the figures, in which equal or similar parts are indicated by the same reference sign, and in which:

Figure 1 shows a schematic representation of a preferred embodiment of the method according to the invention.
Figure 2 represents graphically how vector-characteristic parameters can be obtained for an ellipse shape determined on the basis of shape-characteristic parameters for an ellipse or circle shape type.
Figures 3A-C represent graphically how vector-characteristic parameters can be obtained for a parabola shape determined on the basis of shape-characteristic parameters for a parabola shape type.
Figures 4A-B represent graphically how vector-characteristic parameters can be obtained for a hyperbola shape determined on the basis of shape-characteristic parameters for a hyperbola shape type.
Figure 5 represents graphically how vector-characteristic parameters can be obtained for a hyperbola with tangents near the vertices shape, determined on the basis of shape-characteristic parameters for a hyperbola with tangents near the vertices shape type.
Figure 6 represents a flow chart implementing a method as described herein in case of determining example x-y space coordinates for the visualization of a contour shape between two adjacent z-levels for a line shape.

**Detailed description**

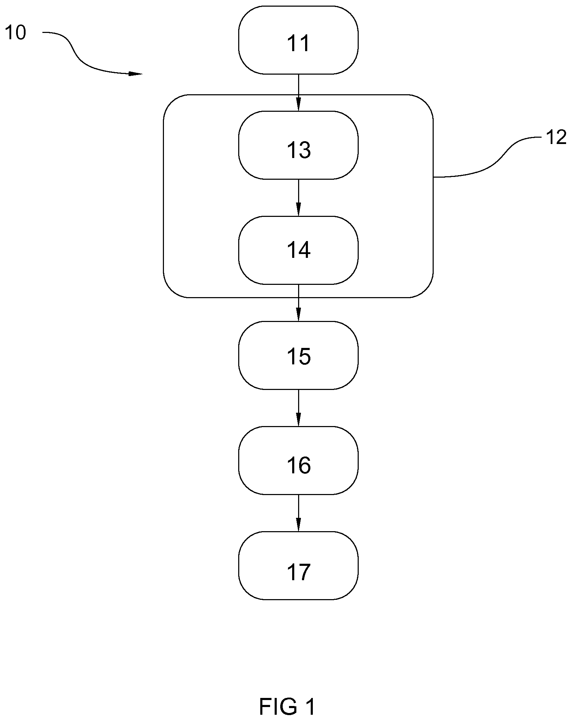

Referring to Fig. 1, a method 10 according to aspects of the present invention comprises several steps.
Firstly, the bivariate polynomial and boundary conditions describing a x-y canvas are loaded into the processing means of a computer. The x-y canvas defines the area, i.e. the boundary, within which one wishes to visualize the polynomial.
In following steps 11-16, the polynomial is processed within the boundary conditions for visualization by the processing means of the computer.
In a following step 17, the polynomial is visualized on visualization means.
The polynomial can for example be a second order polynomial in the form of $z = A \cdot x^2 + B \cdot x \cdot y + C \cdot y^2 + D \cdot x + E \cdot y + F$. It will be convenient to note that methods 10 according to the invention are not limited to second order polynomials. The example methods described below can be readily adapted to fit higher order polynomials as well. The boundary conditions can define the x-y canvas within which the polynomial is to be processed. These boundary conditions for example define a minimal x-value, a maximal x-value, a minimal y-value and a maximal y-value.

The steps 11-16 of processing the polynomial according to methods 10 of the invention can be performed in various ways.

Firstly, in a step 11, a plurality of distinct z-values may be determined. This plurality of distinct z-values can advantageously be determined on the basis of the range of z-values of the polynomial within the boundary conditions. Advantageously, this range of z-values of the polynomial within the boundary conditions can be determined first. One possibility is by evaluating the polynomial on a set of x,y-values forming a grid within the boundary conditions. Another possibility for obtaining a range of z-values of the polynomial within the boundary conditions is by evaluating mathematical equations which approximate the polynomial and which may be easier or faster to evaluate. By way of example, when A, B or C are not zero, differential equations based on the polynomial within the boundary conditions may be solved. Alternatively, when A, B and C are zero, the equation $z = D \cdot x + E \cdot y + F$ may be solved near the boundary conditions.

Based on the determined or estimated range of z-values of the polynomial the minimal z-value Zmin and the maximal z-value Zmax is determined, which should extend such that Zmin and Zmax substantially corresponds to the actual minimal and maximal z-values of the polynomial in the x,y-canvas, respectively, or differs from the actual values by advantageously no more than 15%, advantageously no more than 10% based on the actual values.

Subsequently, the plurality of distinct z-values (Z1 through Zi) can be determined that forms a set Zspan, which spans Zmin and Zmax. Preferably, the number of z-values determined in step 11 is more than 3, more preferably the number of z-values is between 6 and 16, even more preferably the number of z-values is 9. Preferably, the maximal z-value of Zspan is larger than or equal to Zmax and the minimal z-value of Zspan is smaller than or equal to Zmin. There are several ways of determining the plurality of distinct z-values within the boundaries of Zmin and Zmax. By way of example, the z-values of the plurality of distinct z-values are equidistant or selected according to a logarithmic scale, e.g. an array formed by multiplying an integer by 10 to the power of successive integers, e.g. 0.05, 0.5, 5, 50, 500, etc. The z-values of the plurality of distinct z-values can be multiples of 5. The z-values of the plurality of distinct z-values can for example be determined by first creating sets of z-values as multiples of 1, 2, 3, 4, etc., followed by awarding preference points to a set of z-values and choosing the set of z-values that is awarded the most preference points.

Subsequently, in a step 12, a combination of shape-characteristic parameters of the polynomial is determined. Preferably, the combination shape-characteristic parameters of the polynomial is determined for each z-value of the plurality of distinct z-values determined in step 11. In one advantageous aspect, the combination of shape-characteristic parameters comprises a shape type of the polynomial, which can be determined in an optional step 13. The combination of shape-characteristic parameters may comprise a combination of additional parameters which may be obtained in a step 14 for each z-value of the plurality of distinct z-values.

The shape type in step 13 can be determined on the basis of the values of factors A, B, C, D, E and F of the polynomial. In several instances the shape type is determined on the basis of the values for A*C-B^2/4 and A*(C*F-E^2/4)-B*((B*F)/4-(D*E)/8)+D*((B*E)/8-(C*D)/4). The shape type can be selected from a group consisting of a straight line, a rectangle and a curve. The curve shape type can be a group consisting of an ellipse shape type, a parabola shape type and a hyperbola shape type. Here, it is possible, but not necessary, to differentiate between an ellipse and a circle. Furthermore, it is possible, but not necessary, to differentiate between a hyperbola and a hyperbola with asymptotic tangents near the vertices.

The shape type can be determined using various methods and none is particularly critical. The polynomial is advantageously classified according to a shape type at each z-value of the plurality of distinct z-values, which may facilitate vector construction.

For example, if factor F of the polynomial equals infinity or minus infinity or all other factors of the polynomial are zero, the shape type is a rectangle. In another example, if factor A is not zero or factor C is not zero and A x C is not zero, but very small, e.g. almost zero, all factors in the polynomial are first multiplied by an arbitrary factor larger than 1 or smaller than -1, e.g. 10, until the absolute product of A and C exceeds a predetermined threshold, e.g. larger than $10^{-9}$ when both A and C are not zero, or, when A is zero, the absolute of C is larger than $10^{-9}$ or, when C is zero, the absolute of A is larger than $10^{-9}$. If A or A divided by D is almost zero and if B or B divided by F is almost zero and if C or C divided by E is almost zero, the shape type is a straight line.

For purposes of the present description, a value being referred to as almost zero refers to the value being on the order of magnitude equal to or smaller than $10^{-5}$, advantageously equal to or smaller than $10^{-6}$, advantageously equal to or smaller than $10^{-7}$, advantageously equal to or smaller than $10^{-8}$, advantageously equal to or smaller than $10^{-9}$. For purposes of the present description, a value being referred to as being not almost zero refers to the value being on the order of magnitude equal to or larger than $10^{-5}$, advantageously equal to or larger than $10^{-6}$, advantageously equal to or larger than $10^{-7}$, advantageously equal to or larger than $10^{-8}$, advantageously equal to or larger than $10^{-9}$.

In another example, the determinant of Aq (i.e. $|Aq|$, see Matrix 1) and the determinant of A33 (i.e. $|A33|$, see Matrix 2) are calculated to determine the shape type. Possible shape types which can be selected based on values of Aq and/or A33 are: a straight line, a parabola, a hyperbola, a hyperbola with asymptotic tangents near the vertices, or an ellipse. Examples are given below.

$$Aq = \begin{bmatrix} A & \dfrac{B}{2} & \dfrac{D}{2} \\[2mm] \dfrac{B}{2} & C & \dfrac{E}{2} \\[2mm] \dfrac{D}{2} & \dfrac{E}{2} & F \end{bmatrix} \qquad \text{Matrix 1}$$

$$A33 = \begin{bmatrix} A & \dfrac{B}{2} \\[2mm] \dfrac{B}{2} & C \end{bmatrix} \qquad \text{Matrix 2}$$

If $|Aq| = 0$ and $|A33| < 0$, the shape type is a hyperbola with asymptotic tangents near the vertices. If $|Aq| = 0$ and $|A33| > 0$ or if $|Aq| = 0$ and both D, E and F are zero, the shape type is a straight line only if B,D and E are zero and either A is zero but C is not zero or C is zero and A is not zero. In all other cases if $|Aq| = 0$, the shape type is a straight line.

If $|A33| = 0$, the shape type is a parabola. If $|A33| < 0$ and if $|A33|$ is not almost zero (e.g. order of magnitude is equal to or larger than $10^{-8}$) and if $A \cdot C - 0.25 \cdot B^2 < 0$, the shape type is a hyperbola.

If $C \cdot |Aq| < 0$ or $|A33|$ is almost zero, the shape type may be an ellipse, a parabola or a hyperbola. Determination of the shape type can in this specific case be done by determining a combination of parameters for an ellipse and verifying if these parameters would result in an ellipse with a valid rotation angle, i.e. a rotation angle wherein a set of x,y points on the ellipse coincide with the polynomial. If the rotation angle is valid, and $|A33|$ is not almost zero, the shape type is an ellipse. Otherwise, if the rotation angle is valid, and both the x and y values of the center of the supposed ellipse lie between $-1 \times 10^6$ and $1 \times 10^6$, the shape type is an ellipse. Otherwise, the shape type is a parabola. In all other cases, if $|A33|$ is almost zero, the shape type is a hyperbola if $|Aq|$ is almost zero and $A \cdot C - 0.25 \cdot B^2 < 0$. Otherwise, the shape type is a parabola.

Shape-characteristic parameters can be determined in step 14 on the basis of the shape type determined for the polynomial.

Advantageously, based on the shape type that has been determined for the polynomial in step 13, a specific combination of shape characteristic parameters is determined, which combination can differ between different shape types.

For a straight line shape type the shape-characteristic parameters may comprise a and b in $y = a \cdot x + b$ if both A and C are almost zero. Otherwise, if A is not almost zero and C and E are very small, the shape-characteristic parameters may comprise the root of $D^2 - 4 \cdot A \cdot F < 0$. Otherwise, if C is not very small and A and D are almost zero (e.g. order of magnitude is equal to or smaller than $10^{-9}$), the shape-characteristic parameters comprise the root of $E^2 - 4 \cdot C \cdot F < 0$.

For a rectangle the shape-characteristic parameters may comprise the boundary conditions describing the x-y canvas. Alternatively, or in addition, the shape-characteristic parameters may comprise one or any combination of: a center, one or more corner points, any arbitrary point, horizontal and/or vertical shift relative to the arbitrary point, a width and a height.

For an ellipse the shape-characteristic parameters may comprise one or any combination of: a center, a semi-major axis, a semi-minor axis and a rotation angle. The center (x,y) may be calculated by solving equation $\left( \dfrac{B \cdot E - 2 \cdot C \cdot D}{4 \cdot A \cdot C - B^2}, \dfrac{D \cdot B - 2 \cdot A \cdot E}{4 \cdot A \cdot C - B^2} \right)$. The semi-major axis and semi-minor axis may be derived from the root of the inverse eigenvalues.

The eigenvalues may be calculated as follows. The eigenvalues may refer to the absolute values of $0.5 \cdot (u + w - r)$ and $0.5 \cdot (u + w + r)$, where $r = \sqrt{(u - w)^2 + 4 \cdot v^2}$ and where $u = A'$, $v = B'/2$ and $w = C'$. Here, $A'$, $B'$ and $C'$ may be equal to $m \cdot A$, $m \cdot B$ and $m \cdot C$ respectively, where factor m is calculated as follows. $F' = A \cdot h^2 + B \cdot h \cdot k + C \cdot k^2$, where h is the position of the center on the x-axis and k is the position of the center on the y-axis. If $F = 0$ and $|F' - 1|$ is almost zero, $m = 1$. Otherwise, if $F \neq 0$ and $\left| \dfrac{F' - 1 - F}{F} \right|$ is almost zero, $m = 1$. In all other cases, $m = \dfrac{-1}{-F' + F}$.

The rotation angle can be determined as $n \cdot 90$ if $B = 0$, where n is either 0, 1,2 or 3. If B is not zero and $A \neq$

*C*, the rotation angle is $n \cdot 90 + 0.5 \cdot atan\left(\frac{B}{A-C}\right)$, where n is either 0, 1,2 or 3. In all other cases, the rotation angle is $n \cdot 90 + 45$, where n is either 0, 1, 2 or 3. In all cases, n may be assumed 0, except when $|A \cdot x_1{}^2 + B \cdot x_1 \cdot y_1 + C \cdot y_1{}^2 + D \cdot x_1 + E \cdot y_1 + F| + |A \cdot x_2{}^2 + B \cdot x_2 \cdot y_2 + C \cdot y_2{}^2 + D \cdot x_2 + E \cdot y_2 + F|$ is not small (e.g. order of magnitude is $10^{-6}$), where $x_1 = a \cdot cos(\varphi) + h$, $y_1 = a \cdot sin(\varphi) + k$, $x_2 = b \cdot cos(\varphi + 90) + h$ and $y_1 = b \cdot sin(\varphi + 90) + k \cdot$, where a is the semi-major axis, b is the semi-minor axis, h is the position of the center on the x-axis and k is the position of the center on the y-axis.

For a circle the shape-characteristic parameters may comprise the same shape-characteristic parameters as an ellipse, except that the semi-major axis is equal to the semi-minor axis.

For a parabola the shape-characteristic parameters may comprise one or any combination of: a center, the orientation of the axis of symmetry, a rotation angle and a, b and c in the equation $y = a \cdot x^2 + b \cdot x + c$ for a vertical orientation of the axis of symmetry and a, b and c in the equation $x = a \cdot y^2 + b \cdot y + c$ for a horizontal axis of symmetry. If B is almost zero, the rotation angle may be assumed 0. Otherwise, if and A is equal to C, the rotation angle is 45. Otherwise, if A is not equal to C, the rotation angle is $0.5 \cdot atan\left(\frac{B}{A-C}\right)$ and A,B,C,D and E may be modified by assigning the following values respectively: $A \cdot cos(\varphi)^2 \cdot B \cdot cos(\varphi) \cdot sin(\varphi)$, $-2 \cdot A \cdot cos(\varphi) \cdot sin(\varphi) + B \cdot (cos(\varphi)^2 - sin(\varphi)^2) + 2 \cdot C \cdot cos(\varphi) \cdot sin(\varphi)$, $A \cdot sin(\varphi)^2 - B \cdot cos(\varphi) \cdot sin(\varphi) + C \cdot cos(\varphi)^2$, $D \cdot cos(\varphi) + E \cdot sin(\varphi)$ and $-D \cdot sin(\varphi) + E \cdot cos(\varphi)$, wherein $\varphi$ is the rotation angle. Subsequently, the orientation of the axis of symmetry is vertical if C is very small and the orientation of the axis of symmetry is horizontal otherwise. If the axis of symmetry is vertical, $a = -A/E$, $b = -D/E$ and $c = -F/E$. Otherwise, if the axis of symmetry is horizontal, $a = -C/D$, $b = -E/D$ and $c = -F/D$. The center is comprised of the values defined by $\frac{-b}{2 \cdot a}$ and $c - \frac{b^2}{4 \cdot a}$ for x,y respectively if the orientation of the axis of symmetry is vertical and for y,x respectively if the orientation of the axis of symmetry is horizontal.

For a hyperbola and a hyperbola with asymptotic tangents near the vertices, the shape-characteristic parameters may comprise one or any combination of: a center, a rotation angle, a transverse axis, a semi-major axis and a semi-minor axis and a vertex. The center (x,y) may be calculated by solving equation $\left(\frac{B \cdot E - 2 \cdot C \cdot D}{4 \cdot A \cdot C - B^2}, \frac{D \cdot B - 2 \cdot A \cdot E}{4 \cdot A \cdot C - B^2}\right)$. The rotation angle is one of several alternatives. If B is not zero and A is not equal to C, one alternative of the rotation angle $\alpha$ is $0.5 \cdot atan\left(\frac{B}{A-C}\right)$. Otherwise, if B is not zero and A is equal to C, one alternative $\alpha$ is 45. Otherwise, if B is zero, one alternative $\alpha$ is zero. If this alternative $\alpha$ is zero, the alternatives for the rotation angle comprise 0 and 90. In all other cases, the alternatives for the rotation angle comprise $\alpha$, $-\alpha$, $\alpha + 90$ and $-\alpha + 90$. The semi-minor axis and semi-major axis may be derived from the root of the inverse eigenvalues. These eigenvalues can be determined as the absolute values of $0.5 \cdot (u + w - r)$ and $0.5 \cdot (u + w + r)$, where $r = \sqrt{(u-w)^2 + 4 \cdot v^2}$ and where $u = A'$, $v = B'/2$ and $w = C'$. Here, $A'$, $B'$ and $C'$ may be equal to $m \cdot A$, $m \cdot B$ and $m \cdot C$ respectively, where factor m is calculated as follows. $F' = A \cdot h^2 + B \cdot h \cdot k + C \cdot k^2$, where h is the position of the center on the x-axis and k is the position of the center on the y-axis. If $F = 0$ and $|F' - 1|$ is very small (e.g. order of magnitude is $10^{-6}$), $m = 1$. Otherwise, if $F \neq 0$ and $\left|\frac{F'-1-F}{F}\right|$ is very small (e.g. order of magnitude is $10^{-5}$), $m = 1$. In all other cases, $m = \frac{-1}{-F'+F}$. The transverse axis is one of two alternatives. These alternatives comprise a horizontal and a vertical transverse axis. A hyperbola has a left branch and a right branch. For each branch and for each alternative of transverse axis and for each alternative of semi-major axis and semi-minor axis and for each alternative of rotation angle, $Z_{alt}$ may be defined as the sum of $|A \cdot x^2 + B \cdot x \cdot y + C \cdot y^2 + D \cdot x + E \cdot y + F|$ for a set of points until a combination of conditions is satisfied. Advantageously, this set of points may comprise the vertex and two other points that lie on the hyperbola branch at an angle $\theta_1$ and $\theta_2$ which correspond preferably to angles of which the absolute may be equal to half the angle of the positive asymptote. The combination of conditions may comprise the condition that $Z_{alt}$ is small (e.g. order of magnitude is the maximum between $10^{-6}$ and $10^{-8}$ times $|A \cdot h^2 + B \cdot h \cdot k + C \cdot k^2 + D \cdot h + E \cdot k + F|$ where h,k represents the center). Further, the combination of conditions may comprise the condition that either the sum of the semi-major axis and the semi-minor axis is not almost zero, e.g. larger than $10^{-3}$ or the rotation angle lies between $\theta_1$ and $\theta_2$. If these conditions are both met, the transverse axis, semi-major axis and semi-minor axis and rotation angle may be equal to the transverse axis, semi-major axis and semi-minor axis and rotation angle that first led to the satisfaction of these conditions. Otherwise, if only the first condition is met, the transverse axis, semi-major axis and semi-minor axis and rotation angle may be equal to the transverse axis, semi-major axis and semi-minor axis and rotation angle that led to the lowest value of $Z_{alt}$.

Subsequently, at least one vector-characteristic parameter is determined in step 15 based on the corresponding combination of shape-characteristic parameters of step 12. Preferably, the at least one vector-characteristic parameter of the polynomial is determined for each z-value of the plurality of distinct z-values. The combination of shape-characteristic parameters and at least one vector-characteristic parameter is advantageously representative for a contour of the polynomial, such as at the corresponding z-value. The computation of the vector-characteristic parameters can either be performed for each z-value separately, or jointly for each two adjacent z-values. In the latter case, at least one vector-characteristic parameter is obtained for each z-value.

The at least one vector-characteristic parameter is advantageously representative of a straight line or a bezier curve. It can comprise a line-piece, points on a line, points on a curve, curve-control points or a combination thereof. For example, vector-characteristic parameters may comprise of two points that define a line, which may describe a contour of which the shape type characteristic was determined to be of a straight line shape type.

For example, vector-characteristic parameters may comprise of three or more points that define two or more lines, which may describe a contour of which the shape type characteristic was determined to be of the shape type of a hyperbola with asymptotic tangents near the vertices or of a rectangle shape type.

For example, vector-characteristic parameters may comprise the end-points and control points of a bezier curve, which may describe a contour of which the shape type characteristic was determined to be of a parabola shape type.

For example, vector-characteristic parameters may comprise a combination of points and control points of a single segment or multi-segment bezier curve, which may describe a contour of which the shape type characteristic was determined to be of an ellipse shape type or a hyperbola shape type.

For example, for the straight line and rectangle shape type the vector-characteristic parameters for a z-value can be represented by a straight line shape that may be determined using the shape-characteristic parameters and may comprise the intersections of lines described by $y=a \cdot x+b$ with the borders of the canvas in x-y space. If a combination of 2 adjacent z-values comprises infinity, minus infinity or a z-value of which the shape type is a rectangle or a z-value of which the shape coordinates define a line outside of the drawing canvas, one or more of the canvas corners may be included in the list of coordinates. Subsequently, these coordinates may be converted into canvas coordinates.

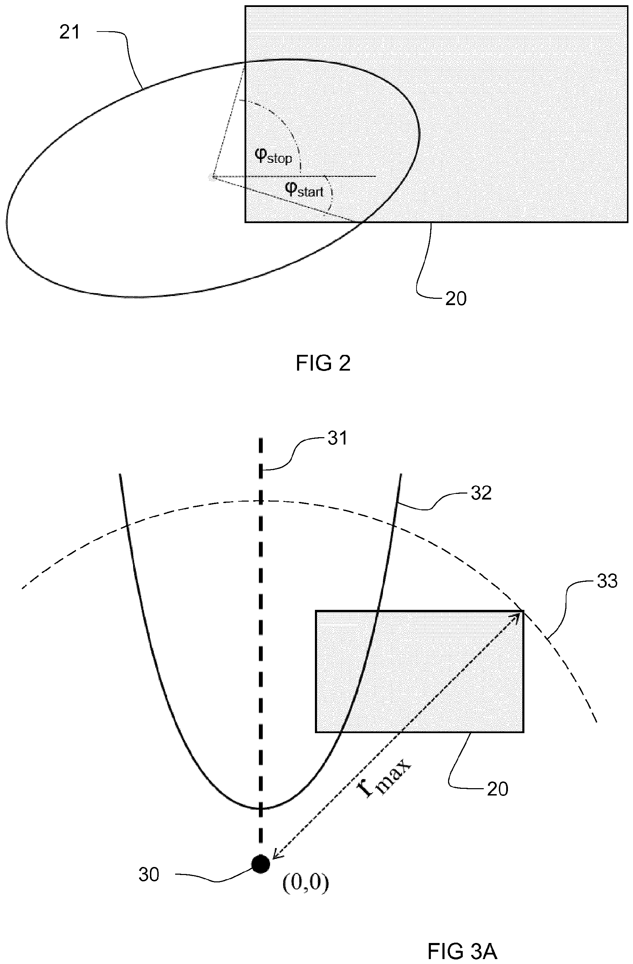

In an alternative example, and referring to Fig. 2, for the ellipse and circle shape type the vector-characteristic parameters for a z-value can be represented by an ellipse shape that may be determined using the shape-characteristic parameters. For example, if the ellipse 21 lies only partly within the borders of the canvas 20, angles may be determined using the shape-characteristic parameters of the ellipse 21 that describe the points of intersection between the ellipse 21 and the borders of canvas 20. These angles may be denoted as $\varphi$start and $\varphi$stop. Subsequently, $\varphi$start and $\varphi$stop are used to define a space in which coordinates are calculated that coincide with points on the ellipse 21 that lie within or in the proximity of the canvas borders. Otherwise, if the ellipse 21 lies completely within the canvas borders, a list of coordinates may be determined that coincide with a series of points on the ellipse 21, preferably evenly divided over the border of the ellipse 21. Subsequently, for each pair of adjacent coordinates in the list of coordinates, coordinates of control points may be determined. Together with these same coordinates, these control points define a bezier curve or a series of bezier curves approximating a section on the ellipse 21. These coordinates may be inserted into the list of coordinates. Also, coordinates of canvas corner points that are overlapped by the ellipse 21 may be added to the list of coordinates. Subsequently, coordinates in the list of coordinates may be converted into canvas coordinates.

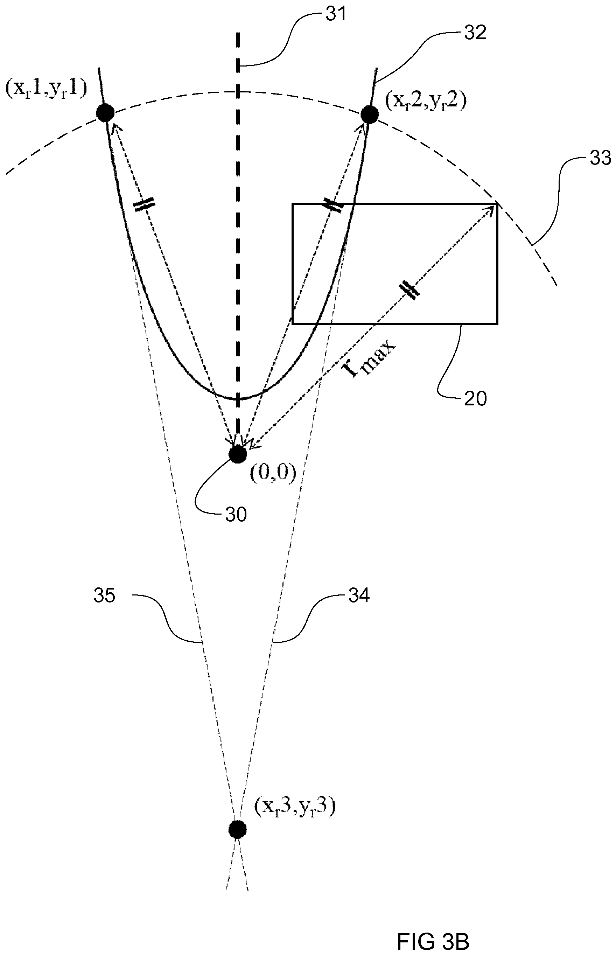

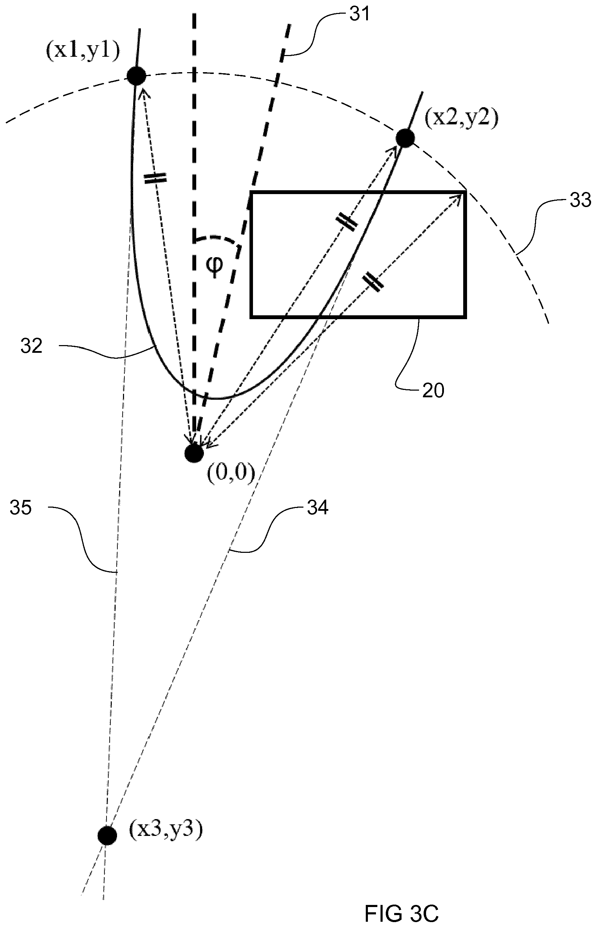

In an alternative example and referring to Fig. 3A-C, for the parabola shape type the vector-characteristic parameters for a z-value can be represented by a parabola shape that may be determined using the shape-characteristic parameters. From the distances between the origin 30 of the x-y space and each corner of the canvas 20, the greatest distance may be denoted as rmax. Subsequently, rotated coordinates $(x_r1,y_r1)$ and $(x_r2,y_r2)$ may be determined on the parabola 32 that coincide with the intersections of the parabola 32 and a circle 33 around the origin 30 that has a radius of $r_{max}$. Subsequently, coordinates of a rotated control point $(x_r3,y_r3)$ may be determined as intersection of the tangents 34, 35 at $(x_r1,y_r1)$ and $(x_r2,y_r2)$ (see Figure 3B). Subsequently, unrotated coordinates (x1,y1), (x2,y2) and coordinates of the unrotated control point (x3,y3) may be determined by rotation of these rotated points about the origin 30 at angle $\varphi$ (see Figure 3C). A list of coordinates may comprise the coordinates of these unrotated points. Also, coordinates of canvas corner points may be added to the list of coordinates. Subsequently, coordinates in the list of coordinates may be converted into canvas coordinates. In Figs. 3A-C, reference 31 denotes an axis of symmetry of the parabola.

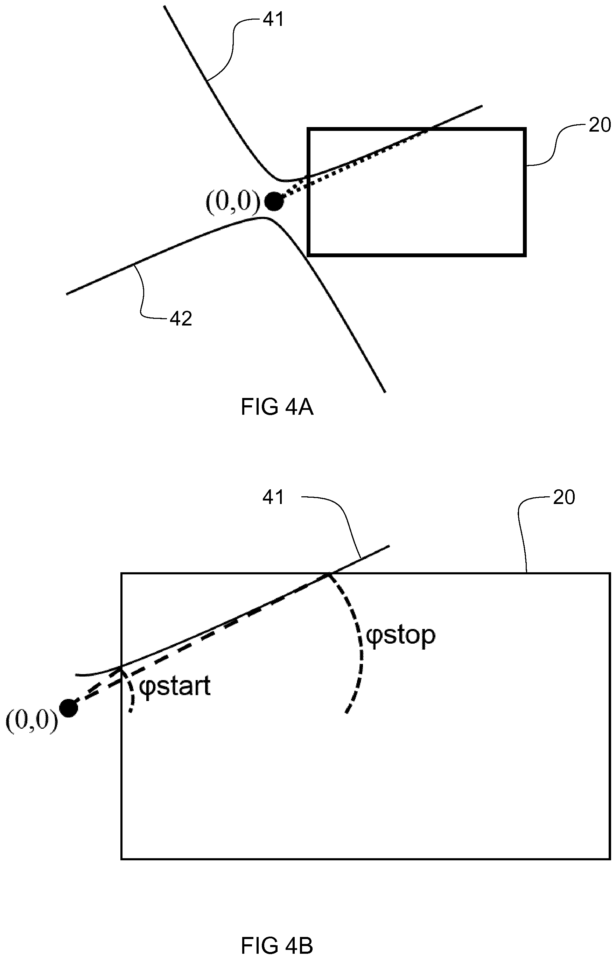

In a yet alternative example and referring to Figs. 4A-B, for a hyperbola shape type the vector-characteristic parameters for a z-value can be represented by a hyperbola shape that may be determined using the shape-characteristic parameters. Angles may be determined from the shape characteristic parameters of the hyperbola for the left branch 41 and/or the right branch 42 that describe the points of intersection between the hyperbola and the borders of the canvas 20. These angles may be denoted as $\varphi$start and $\varphi$stop and may be different for each branch or may not exist at all for a branch 42 that does not intersect with any canvas border (see Figure 4A). Subsequently, $\varphi$start and $\varphi$stop are used to define a space for which a list of coordinates is calculated that coincide with points on the hyperbola branch 41 that lie within or in the proximity of the borders of the canvas 20 (see Figure 4B). Subsequently, control points may be determined between each pair of adjacent coordinates in the list of coordinates. Together with these same coordinates, these control points define a bezier curve or a series of bezier curves approximating a section on a branch of the hyperbola. These coordinates may be inserted into the list of coordinates. Also, coordinates of one or more canvas corner points may be added to the list of coordinates. Subsequently, coordinates in the list of coordinates may be converted into canvas coordinates.

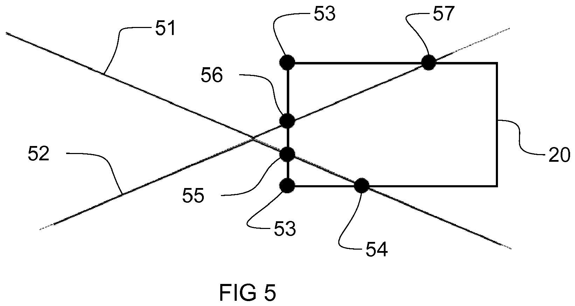

In a still alternative example and referring to Fig. 5, for the hyperbola with tangents near the vertices shape type the vector-characteristic parameters for a z-value can be represented by straight lines between three or more points for each branch. The coordinates of these points may be determined using the shape-characteristic parameters as follows. For each branch 51, 52 of the hyperbola, coordinates of points of intersection 54-57 with the border of the canvas 20 may be calculated in x-y space. Subsequently, the list of coordinates of points of intersections 54-57 for each branch may be incremented with the coordinates of one or more canvas corners 53 (see Figure 5). Subsequently, if the center of the hyperbola lies within the border of the canvas 20, the coordinates of the hyperbola center may be inserted in the list of coordinates of points of intersections for each branch. Subsequently, these coordinates may be converted into canvas coordinates.

The at least one vector characteristic parameters can now advantageously be used for determining drawing directives in a step 16. These drawing directives are required for visualizing the polynomial on the display in a step 17. The drawing directives are typically specific for the visualization protocol that is used on the visualization means. For example, a vector description according to the svg protocol for a rectangle, parabola or (a series of) bezier curves could be a single path element. To this end, the at least one vector-characteristic parameter may be converted into coordinates on the canvas and these coordinates may be combined with drawing commands for straight lines or a series of bezier curves into a single string for each z-value or each combination of 2 adjacent z-values.

For each shape type, the conversion of x-y space coordinates and/or control points may be executed as a last step prior to the generation of the drawing directives or any other step after the determination of x-y space coordinates and prior to the generation of the drawing directives or the determination of x-y space coordinates may be skipped and the canvas coordinates and the drawing directives may be calculated directly. Also, for each shape type, the resulting drawing shape element may be visualized directly in the vector plot or may be used as a mask in the vector plot to mask the visualization of a (colored) rectangle.

Subsequently, in step 17, a combination of vectors for the plurality of distinct z-values is visualized on visualization means. These visualization means can be any known means to directly visualize or project an image, like a television, a computer screen, a tablet screen, a smartphone screen and a beamer.

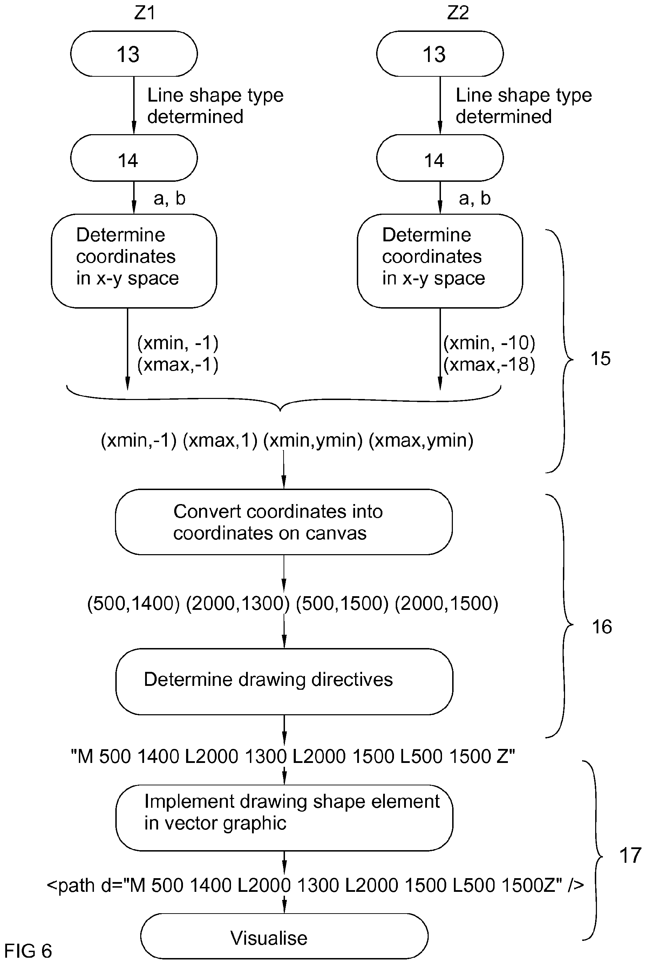

By way of example, Fig. 6 shows a flow chart implementing the method 10 described above in case of determining example x-y space coordinates for the visualization of a contour shape between two adjacent z-levels for a line shape. The process flow for other shape types is identical, except for the shape-characteristic parameters, which will be specific for each particular shape type as described above. Additionally, since the vector graphics will not always be straight lines, but can be curves, such as Bezier curves, control points are determined for a pair of adjacent coordinates in step 16, which further define the curve.

The invention also relates to a system for the visualization of bivariate polynomial $z = A \cdot x^2 + B \cdot x \cdot y + c \cdot y^2 + D \cdot x + E \cdot y + F$, comprising loading means adapted for loading a polynomial and boundary conditions, processing means adapted for processing the polynomial within the boundary conditions for visualization, and visualization means adapted for visualizing the polynomial processed for visualization within the boundary conditions, wherein the processing means is loaded with computer program code adapted for performing the previously described method 10.

The invention further relates to a computer readable medium comprising computer program code, which, when run on a computer, is adapted for performing the previously described method 10.

**Claims**

1. Method (10) for the visualization of bivariate polynomial $z = A \cdot x^2 + B \cdot x \cdot y + c \cdot y^2 + D \cdot x + E \cdot y + F$, comprising the steps of:

   loading a polynomial and boundary conditions (20) defining a domain of variables x and y within which the polynomial is to be processed into computer processing means,
   processing (11-16), by the computer processing means, of the polynomial within the boundary conditions for visualization and
   visualizing (17) the polynomial on visualization means,

   wherein the processing step comprises the steps of:

   determining (11) a plurality of distinct z-values, wherein the plurality of distinct z-values overlap z-values spanning the boundary conditions (20),
determining (12) a combination of shape-characteristic parameters of the polynomial, wherein determining the combination of shape-characteristic parameters comprises determining a shape type of the polynomial on the basis of the values of factors A, B, C, D, E and F,
determining (15) at least one vector-characteristic parameter defining a location of a contour of the polynomial based on the corresponding combination of shape-characteristic parameters, wherein the combination of shape-characteristic parameters and the at least one vector-characteristic parameter are representative for a contour of the polynomial at the each distinct z-value and
determining (16) drawing directives on the basis of the combination of vector-characteristic parameters.

2. Method according to claim 1, wherein the boundary conditions (20) define a minimal x-value, a maximal x-value, a minimal y-value and a maximal y-value.

3. Method according to claim 1 or 2, wherein the combination of shape-characteristic parameter is determined on the basis of the shape type.

4. Method according to any one of the preceding claims, wherein the shape type is determined on the basis of the values for $A * C - \frac{B^2}{4}$ and $A * \left( C * F - \frac{E^2}{4} \right) - B * \left( \frac{B*F}{4} - \frac{D*E}{8} \right) + D * \left( \frac{B*E}{8} - \frac{C*D}{4} \right)$.

5. Method according to any one of the preceding claims, wherein the shape type is selected from a group consisting of a straight line, a rectangle and a curve.

6. Method according to claim 5, wherein the curve shape type is selected from a group consisting of an ellipse shape type, a parabola shape type and a hyperbola shape type.

7. Method according to any one of the preceding claims, wherein the at least one vector-characteristic parameter comprises one or a combination of: a line-piece, points on a line, points on a curve, and curve-control points.

8. Method according to any one of the preceding claims, wherein the plurality of distinct z-values spanning the boundary conditions (20) are determined by determining the z-values on a set of x,y-values forming a grid.

9. Method of any one of the preceding claims, wherein determining the combination of shape-characteristic parameters comprises determining a shape type of the polynomial, wherein the shape type is selected from a group comprising an ellipse (21), wherein the combination of shape-characteristic parameters is determined on the basis of the shape type determined for the polynomial, wherein the combination of shape characteristic parameters for the ellipse shape type comprise one or a combination of: a center, a semi-major axis, a semi-minor axis and a rotation angle (φstart, φstop).

10. Method of any one of the preceding claims, wherein determining the combination of shape-characteristic parameters comprises determining a shape type of the polynomial, wherein the shape type is selected from a group comprising a parabola (32), wherein the combination of shape-characteristic parameters is determined on the basis of the shape type determined for the polynomial, wherein the combination of shape characteristic parameters for the parabola shape type comprise one or a combination of: a center (30), at least one parameter representative of an axis of symmetry (31) of the parabola (32), and a rotation angle (φ).

11. Method according to any one of the preceding claims, wherein the at least one vector-characteristic parameter comprises one or a combination of shapes selected from a list consisting of straight lines and Bezier-curves.

12. System for the visualization of bivariate polynomial $z = A \cdot x^2 + B \cdot x \cdot y + c \cdot y^2 + D \cdot x + E \cdot y + F$, comprising loading means adapted for loading a polynomial and boundary conditions, processing means adapted for processing the polynomial within the boundary conditions for visualization, and visualization means adapted for visualizing the polynomial processed for visualization within the boundary conditions, wherein the processing means is loaded with computer program code adapted for performing the method of any one of the preceding claims.

13. Computer readable medium comprising computer program code, which, when run on a computer, is adapted for performing the method of any one of claims 1 to 11.

**Patentansprüche**

**1.** Verfahren (10) für die Visualisierung des bivariaten Polynoms z = A · x$^2$ + B · x · y + C · y$^2$ + D · x + E · y + F, das Folgende Schritte umfasst:

Laden eines Polynoms und von Grenzbedingungen (20), die eine Domäne von Variablen x und y definieren, innerhalb der das Polynom verarbeitet werden soll, in ein Computerverarbeitungsmittel,
Verarbeiten (11-16), durch das Computerverarbeitungsmittel, des Polynoms innerhalb der Grenzbedingungen zur Visualisierung, und
Visualisieren (17) des Polynoms auf einem Visualisierungsmittel,

wobei der Verarbeitungsschritt folgende Schritte umfasst:

Bestimmen (11) mehrerer eigenständiger z-Werte, wobei die mehreren eigenständigen z-Werte z-Werte überlappen, die sich über die Grenzbedingungen (20) erstrecken,
Bestimmen (12) einer Kombination von Formcharakteristik-Parametern des Polynoms, wobei das Bestimmen der Kombination von Formcharakteristik-Parametern das Bestimmen eines Formtyps des Polynoms auf der Basis der Werte von Faktoren A, B, C, D, E und F umfasst,
Bestimmen (15) mindestens eines Vektorcharakteristik-Parameters, der eine Position einer Kontur des Polynoms auf der Basis der entsprechenden Kombination von Formcharakteristik-Parametern definiert, wobei die Kombination von Formcharakteristik-Parametern und des mindestens einen Vektorcharakteristik-Parameters für eine Kontur des Polynoms an jedem der eigenständigen z-Werte repräsentativ ist, und
Bestimmen (16) von Zuganweisungen auf der Basis der Kombination von Vektorcharakteristik-Parametern.

**2.** Verfahren nach Anspruch 1, wobei die Grenzbedingungen (20) einen kleinsten x-Wert, einen größten x-Wert, einen kleinsten y-Wert und einen größten y-Wert definieren.

**3.** Verfahren nach Anspruch 1 oder 2, wobei die Kombination von Formcharakteristik-Parametern auf der Basis des Formtyps bestimmt wird.

**4.** Verfahren nach einem der vorangehenden Ansprüche, wobei der Formtyp auf der Basis der Werte für $A * C - \frac{B^2}{4}$ und $A * \left( C * F - \frac{E^2}{4} \right) - B * \left( \frac{B*F}{4} - \frac{D*E}{8} \right) + D * \left( \frac{B*E}{8} - \frac{C*D}{4} \right)$ bestimmt wird.

**5.** Verfahren nach einem der vorangehenden Ansprüche, wobei der Formtyp aus einer Gruppe ausgewählt ist, die aus einer geraden Linie, einem Rechteck und einer Kurve besteht.

**6.** Verfahren nach Anspruch 5, wobei der Kurvenformtyp aus einer Gruppe ausgewählt ist, die aus einem Ellipsenformtyp, einem Parabelformtyp und einem Hyperbelformtyp besteht.

**7.** Verfahren nach einem der vorangehenden Ansprüche, wobei der mindestens eine Vektorcharakteristik-Parameter eines oder eine Kombination von Folgendem umfasst: ein Linienstück, Punkte auf einer Linie, Punkte auf einer Kurve, und Kurvenkontrollpunkte.

**8.** Verfahren nach einem der vorangehenden Ansprüche, wobei die mehreren eigenständigen z-Werte, die sich über die Grenzbedingungen (20) erstrecken, durch Bestimmen der z-Werte an einem Satz x,y-Werte, die ein Gitter bilden, bestimmt werden.

**9.** Verfahren nach einem der vorangehenden Ansprüche, wobei das Bestimmen der Kombination von Formcharakteristik-Parametern das Bestimmen eines Formtyps des Polynoms umfasst, wobei der Formtyp aus einer Gruppe ausgewählt ist, die eine Ellipse (21) umfasst, wobei die Kombination von Formcharakteristik-Parametern auf der Basis des Formtyps bestimmt wird, der für das Polynom bestimmt wurde, wobei die Kombination von Formcharakteristik-Parametern für den Ellipsenformtyp eines oder eine Kombination von Folgendem umfasst: eine Mitte, eine Semi-Hauptachse, eine Semi-Nebenachse, und einen Drehwinkel ($\varphi$start, $\varphi$stop).

**10.** Verfahren nach einem der vorangehenden Ansprüche, wobei das Bestimmen der Kombination von Formcharakteristik-Parametern das Bestimmen eines Formtyps des Polynoms umfasst, wobei der Formtyp aus einer Gruppe ausgewählt ist, die eine Parabel (32) umfasst, wobei die Kombination von Formcharakteristik-Parametern auf der Basis des Formtyps bestimmt wird, der für das Polynom bestimmt wurde, wobei die Kombination von Formcharakteristik-Parametern für den Parabelformtyp eines oder eine Kombination von Folgendem umfasst: eine Mitte (30), mindestens einen Parameter, der für eine Symmetrieachse (31) der Parabel (32) repräsentativ ist, und einen Drehwinkel ($\varphi$).

**11.** Verfahren nach einem der vorangehenden Ansprüche, wobei der mindestens eine Vektorcharakteristik-Parameter eine oder eine Kombination von Formen umfasst, die aus einer Liste ausgewählt sind, die aus geraden Linien und Bezier-Kurven besteht.

**12.** System für die Visualisierung des bivariaten Polynoms z = A · x² + B · x · y + C · y² + D · x + E · y + F, das folgendes umfasst: ein Lademittel, das dafür ausgelegt ist, ein Polynom und Grenzbedingungen zu laden, ein Verarbeitungsmittel, das dafür ausgelegt ist, das Polynom innerhalb der Grenzbedingungen zur Visualisierung zu verarbeiten, und ein Visualisierungsmittel, das dafür ausgelegt ist, das Polynom zu visualisieren, das für eine Visualisierung innerhalb der Grenzbedingungen verarbeitet wurde, wobei in das Verarbeitungsmittel ein Computerprogrammcode geladen wird, der dafür ausgelegt ist, das Verfahren nach einem der vorangehenden Ansprüche auszuführen.

**13.** Computerlesbares Medium, das Computerprogrammcode umfasst, der, wenn er auf einem Computer abläuft, dafür ausgelegt ist, das Verfahren nach einem der Ansprüche 1 bis 11 auszuführen.

**Revendications**

**1.** Procédé (10) de visualisation d'un polynôme à deux variables *z = A · x² + B · x · y + C · y² + D · x + E · y + F,* comprenant les étapes de :

chargement d'un polynôme et de conditions limites (20) définissant un domaine de variables x et y à l'intérieur duquel le polynôme doit être traité dans un moyen de traitement informatique,
traitement (11-16), par le moyen de traitement informatique, du polynôme à l'intérieur des conditions limites pour visualisation et
visualisation (17) du polynôme sur un moyen de visualisation,

dans lequel l'étape de traitement comprend les étapes de :

détermination (11) d'une pluralité de valeurs distinctes de z, la pluralité de valeurs distinctes de z chevauchant des valeurs de z couvrant les conditions limites (20),
détermination (12) d'une combinaison de paramètres du polynôme caractéristiques d'une forme, la détermination de la combinaison de paramètres caractéristiques d'une forme comprenant la détermination d'un type de forme du polynôme sur la base des valeurs des facteurs A, B, C, D, E et F,
détermination (15) d'au moins un paramètre caractéristique d'un vecteur définissant un emplacement d'un contour du polynôme sur la base de la combinaison correspondante de paramètres caractéristiques d'une forme, la combinaison de paramètres caractéristiques d'une forme et l'au moins un paramètre caractéristique d'un vecteur étant représentatifs d'un contour du polynôme à chacune des valeurs distinctes de z et
détermination (16) de directives de dessin sur la base de la combinaison de paramètres caractéristiques d'un vecteur.

**2.** Procédé selon la revendication 1, dans lequel les conditions limites (20) définissent une valeur minimale de x, une valeur maximale de x, une valeur minimale de y et une valeur maximale de y.

**3.** Procédé selon la revendication 1 ou 2, dans lequel la combinaison de paramètres caractéristiques d'une forme est déterminée sur la base du type de forme.

**4.** Procédé selon l'une quelconque des revendications précédentes, dans lequel le type de forme est déterminé sur la base des valeurs pour $A * C - \frac{B^2}{4}$ et $A * \left( C * F - \frac{E^2}{4} \right) - B * \left( \frac{B*F}{4} - \frac{D*E}{8} \right) + D * \left( \frac{B*E}{8} - \frac{C*D}{4} \right).$

**5.** Procédé selon l'une quelconque des revendications précédentes, dans lequel le type de forme est choisi dans un groupe constitué par une ligne droite, un rectangle et une courbe.

6. Procédé selon la revendication 5, dans lequel le type de forme de courbe est choisi dans un groupe constitué par un type de forme elliptique, un type de forme parabolique et un type de forme hyperbolique.

7. Procédé selon l'une quelconque des revendications précédentes, dans lequel l'au moins un paramètre caractéristique d'un vecteur comprend un élément ou une combinaison d'éléments parmi : un morceau de ligne, des points sur une ligne, des points sur une courbe, et des points de contrôle de courbe.

8. Procédé selon l'une quelconque des revendications précédentes, dans lequel la pluralité de valeurs distinctes de z couvrant les conditions limites (20) sont déterminées en déterminant les valeurs de z sur un ensemble de valeurs de x,y formant une grille.

9. Procédé selon l'une quelconque des revendications précédentes, dans lequel la détermination de la combinaison de paramètres caractéristiques d'une forme comprend la détermination d'un type de forme du polynôme, dans lequel le type de forme est choisi dans un groupe comprenant une ellipse (21), dans lequel la combinaison de paramètres caractéristiques d'une forme est déterminée sur la base du type de forme déterminé pour le polynôme, dans lequel la combinaison de paramètres caractéristiques d'une forme pour le type de forme elliptique comprend un élément ou une combinaison d'éléments parmi : un centre, un demi-grand axe, un demi petit-axe et un angle de rotation ($\varphi$start, $\varphi$stop).

10. Procédé selon l'une quelconque des revendications précédentes, dans lequel la détermination de la combinaison de paramètres caractéristiques d'une forme comprend la détermination d'un type de forme du polynôme, dans lequel le type de forme est choisi dans un groupe comprenant une parabole (32), dans lequel la combinaison de paramètres caractéristiques d'une forme est déterminée sur la base du type de forme déterminé pour le polynôme, dans lequel la combinaison de paramètres caractéristiques d'une forme pour le type de forme parabolique comprend un élément ou une combinaison d'éléments parmi : un centre (30), au moins un paramètre représentatif d'un axe de symétrie (31) de la parabole (32), et un angle de rotation ($\varphi$).

11. Procédé selon l'une quelconque des revendications précédentes, dans lequel l'au moins un paramètre caractéristique d'un vecteur comprend une forme ou une combinaison de formes choisies dans une liste constituée par des lignes droites et des courbes de Bézier.

12. Système de visualisation d'un polynôme à deux variables $z = A \cdot x^2 + B \cdot x \cdot y + C \cdot y^2 + D \cdot x + E \cdot y + F$, comprenant un moyen de chargement adapté pour charger un polynôme et des conditions limites, un moyen de traitement adapté pour traiter le polynôme à l'intérieur des conditions limites pour visualisation, et un moyen de visualisation adapté pour visualiser le polynôme traité pour visualisation à l'intérieur des conditions limites, le moyen de traitement étant chargé avec un code de programme informatique adapté pour effectuer le procédé selon l'une quelconque des revendications précédentes.

13. Support lisible par ordinateur comprenant un code de programme informatique qui, lorsqu'il est exécuté sur un ordinateur, est adapté pour effectuer le procédé selon l'une quelconque des revendications 1 à 11.

EP 3 279 867 B1

FIG 1

13

FIG 2

FIG 3A

FIG 3B

FIG 3C

FIG 4A

FIG 4B

FIG 5

Z1                                          Z2

13                                          13

Line shape type                             Line shape type
determined                                  determined

14                                          14

a, b                                        a, b

Determine                                   Determine
coordinates                                 coordinates
in x-y space                                in x-y space          ⎫
                                                                  ⎬  15
(xmin, -1)                                  (xmin, -10)           ⎪
(xmax,-1)                                   (xmax,-18)            ⎭

(xmin,-1) (xmax,1) (xmin,ymin) (xmax,ymin)

Convert coordinates into
coordinates on canvas                                            ⎫
                                                                 ⎪
(500,1400) (2000,1300) (500,1500) (2000,1500)                    ⎬  16
                                                                 ⎪
Determine drawing directives                                     ⎭

"M 500 1400 L2000 1300 L2000 1500 L500 1500 Z"

Implement drawing shape element                                  ⎫
in vector graphic                                                ⎪
                                                                 ⎬  17
<path d="M 500 1400 L2000 1300 L2000 1500 L500 1500Z" />         ⎪
                                                                 ⎭
Visualise

FIG 6

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ALEXA et al.** Computing and Rendering Point Set Surfaces. *IEEE TVCG,* January 2003, vol. 9 (1), 3-15